# EUROPEAN PATENT APPLICATION

(11) **EP 0 918 011 A1**
(43) Date of publication of application: **26.05.1999**
(21) Application number: 98121394.5
(22) Date of filing: 11.11.1998
(51) Int. Cl.: B62B 9/28

(54) **An auxiliary carrying device of a baby carriage**

(30) Priority: 21.11.1997 CN 97249323
(71) Applicant: Chang, Pi-lung, Taipei (TW)
(72) Inventor: Chang, Pi-lung, Taipei (TW)
(74) Representative: Bergentall, Annika Maria

(57) **Abstract**

A rear auxiliary riding board (2) is provided for a baby carriage, which can be detachably mounted on the rear side of the baby carriage, allowing a young child to stand thereon. The rear auxiliary riding board includes a platform (21) on which a young child can stand; at least one wheel (211) mounted on the bottom side of the platform; a coupling device (22) for coupling the rear auxiliary riding board to one side of the baby carriage, the coupling device including at least one clasp (221) which can clasp on one horizontal bar on the baby carriage; and a linking device (23) having a vertical portion (23A) and a horizontal portion (23B), the vertical portion being formed with a plurality of holes which can be selected for fastening the linking device to the coupling device (22) by using a first fastening means, and the horizontal portion being linked to the platform by means of a second fastening means. The linking device (23) can be affixed to the coupling (22) device by means of a bolt-and-nut method through the hole in the frame of the coupling device and at least one of the plurality of holes so selected in the vertical portion of the linking device. The provision of the plurality of vertically lined-up holes formed in the vertical portion of the linking device allows the rear auxiliary riding board to be coupled to any type of baby carriages with rear horizontal bars at different elevations from the ground.

## Description

A practical and new type auxiliary carrying device of a baby carriage refers to the auxiliary carrying device of the baby carriage which can be linked with the rear lateral axis of the baby carriage through assembling and disassembling, which the child can stand on and on which the child can move with the baby carriage.

An ordinary baby carriage, folded or unfolded, usually only enables a baby or a small child to sit on or lie in it. Even the baby carriage with two seats only enables small twins to sit on or lie in it. When an adult goes out with two children or more that two children who have disparity in age, a problem perplexes the adult, that is, when they walk for a long time, the child who does not sit on or lie in the baby carriage cannot continue to walk because his or her legs are tired after walking for a long time. The adult often has to take the child in his or her arms or carry the child on his or her back for a period of time and then the child can continue to walk. The adult and especially the old person or the pregnant woman who go out with the children find it hard to do so.

In view of the above problem, the objective of the practical and new-type carrying device of the baby carriage can be linked with the rear lateral axis of the baby carriage which the child can stand on and on which the child can move with the baby carriage.

Another objective of the practical and new-type auxiliary carrying device is to provide the auxiliary carrying device of the baby carriage which can adapt to various baby carriages by readjusting the height of the foot plate in light of the heights and sizes of the rear lateral axes of diverse baby carriages.

The practical and new-type auxiliary carrying device of a baby carriage can be linked with the rear lateral axis by assembling the disassembling which the child can stand on and on which the child can move with the baby carriage.

The auxiliary carrying device includes the following parts:

The foot plate: The foot plate of proper size on which a child stands. The two pivoting rotating wheels are installed beneath the outer lower side of the foot plate.

The joining component: On the two sides of the joining component there are connectors which can help link the auxiliary carrying device with the rear lateral axis of the baby carriage.

The linking plate: The linking plate links the foot plate with the joining component and consists of the vertical plate connecting the joining component and the lateral plate connecting the foot plate. On one side of the vertical plate and the joining component there is a fixing part, and on the other side there are several fixing holes which are arranged vertically. When the fixing part is linked to a chosen fixing hole, the height of the front of the foot plate and the rear lateral axis of the baby carriage can be readjusted.

It is better to install the non-slipping part on the surface of the foot plate where the child stands so that the child will not slip and can stand on the auxiliary carrying device steadily.

Moreover, the practical and new-type auxiliary carrying device of the baby carriage enables the child to stand, and it enables the cat, dog or other pets to stand or sit.

According to the attached figures, the following is a description of the methods of installation of the practical and new-type auxiliary carrying device for the purpose of gaining a deep understanding of the features and technical specifications of the practical and new-type auxiliary carrying device. However, the methods of installation and attached figures are only used for explanation and not for restriction of the practical and new-type auxiliary carrying device. The parts with the same signs represent the same components.
Fig 1 is a three-dimensional diagram for installation of the practical and new-type auxiliary carrying device of the baby carriage.
Fig 2 is a three-dimensional diagram for installation of the practical and new-type auxiliary carrying device of the baby carriage.
Fig 3a is a side diagram for the link of the connector of the joining component for installation of the practical and new-type auxiliary carrying device of the baby carriage.
Fig 3b is a side figure for the connector of the joining component under the force for installation of the practical and new-type auxiliary carrying device of the baby carriage.
Fig 4 is a three-dimensional figure for installation of the practical and new-type auxiliary carrying device of the baby carriage linked with the folded baby carriage.
Fig 5 is a sketch figure for a child to stand on the auxiliary carrying device of the baby carriage linked with the folded baby carriage as shown in Fig 4.
Fig 6 is a three-dimensional figure for the auxiliary carrying device of the baby carriage similar to Fig 2. Only the joining component is reversed by 180 degrees.
Fig 7a is a sectional figure for the hook-like parts of the joining component under normal conditions (without the force) for installation of the practical and new-type auxiliary carrying device of the baby carriage.
Fig 7b is a sectional figure for the hook-like parts of the joining component under the force for installation of the practical and new-type auxiliary carrying device of the baby carriage.

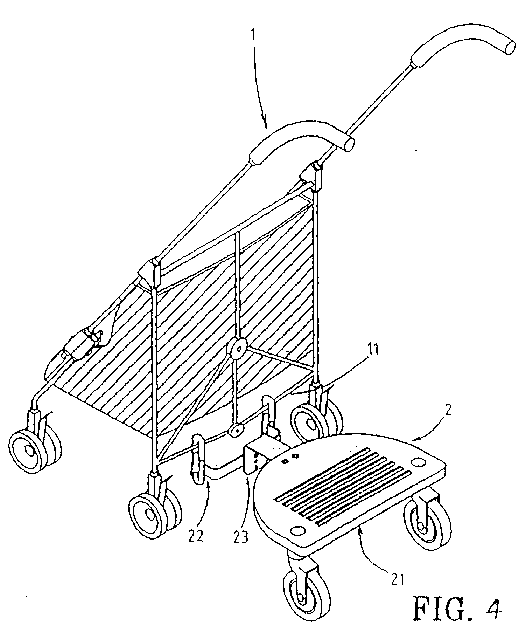

Fig 4 is an explanatory figure for installation of the practical and new-type auxiliary carrying device 2 of the baby carriage linked with the folded baby carriage 1. The folded baby carriage 1 in the figure is used for the demonstrative explanation, so only the summary structure is drawn and the explanation is omitted.

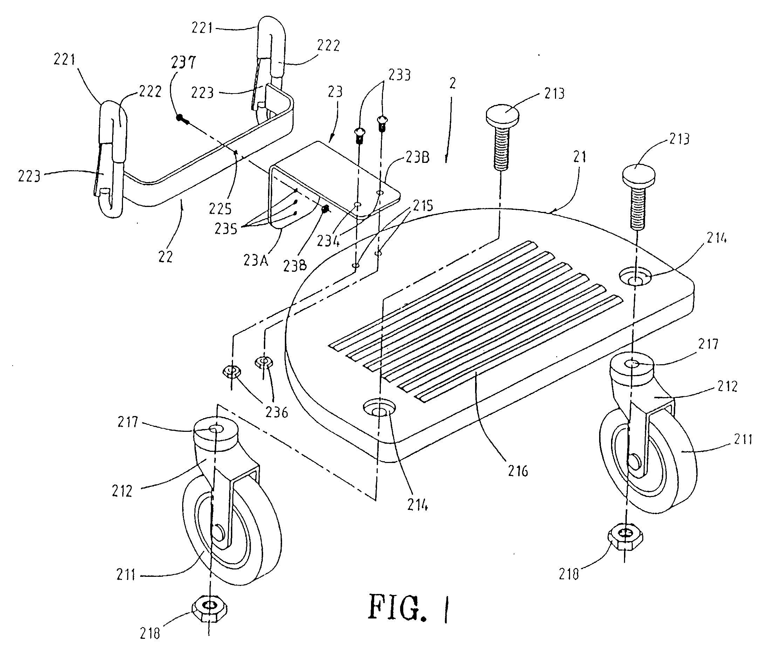

With reference to Fig 1 to Fig 5, the installed practical and new-type auxiliary carrying device 2 of the baby carriage includes the foot plate 21 of proper size on which the child 3 can stand; the joining component 22 which is linked with the rear lateral axis 11 of the baby carriage 1 through assembling and disassembling; the linking plate 23 which connects the foot plate 21 to the joining component 22.

On two outer sides of the foot plate 21 there is the hole 214, and at the centre of its inner side there are several holes 215. The rotating wheels 211 are installed beneath the lower side of the foot plate 21 according to the following method: from above putting the screw 213 through the hole 214 on the outer side of the foot plate 21 and the pivoting hole 217 of the rotating frame 212 of the rotating wheel 211, then tightly screwing the nut 218 downward and installing the rotating wheel 211 on the lower side of the foot plate 21 in a pivoting way.

On the two sides of the joining component 22 there are connectors 221 and 222. Connectors 221 consist of hook-like parts 222 and the elastic parts 223 which contact the hook-like parts 222 through the coiled spring (not shown in the figure) and which can be pressed by the hands of the user. At the centre of the joining component 22 there is a hole 225 (this will be explained later in detail)

The linking plate 23 consists of the vertical plate 23A connecting the joining component 22 and the lateral plate 23B connecting the foot plate 21. On the vertical plate 23A of the linking plate 23 there are several fixing holes 235 which are arranged vertically, and at the end of the lateral plate 23B of the linking plate 23 there are several holes 234. The punching position of the holes 234 and their sizes are compatible with the punching positions of the holes 215 at the centre of the inner side of the foot plate 21 and their sizes.

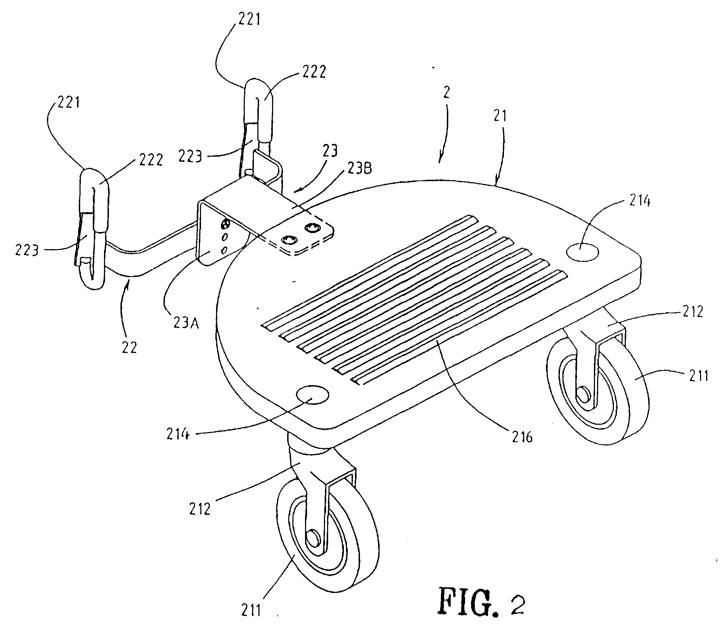

The linking plate 23 is connected with the foot plate 21 through assembling and disassembling. The linking plate 23 is placed under the foot plate 21, the hole 234 on the lateral plate 23B of the linking plate 23 is aimed at the hole 215 on the inner side of the foot plate 21, the screws 233 are put through these holes 215 and 234 respectively and then the nut 236 is screwed tightly. The foot plate 21 is linked with the linking plate 23. This is shown in Fig 2. Or the linking plate 23 is put above the foot plate 21 and is linked with the foot plate 21 according to the above method. This is shown in Fig 1.

The joining component 22 is linked with the linking plate 23 according to the following method: The joining component 22 is put on the outer side of the vertical plate 23A of the linking plate 23, the hole 225 of the joining component 22 is aimed at the freely chosen fixing hole 235 on the vertical plate 23A, the screw 237 is put through the hole 225 of the joining component 22 and the chosen fixing hole 235 on the vertical plate 23A, and the nut 238 is screwed tightly. So the joining component is linked with the linking plate 23. Or the screw 237 is put from the chosen fixing hole 235 through to the hole 225 of the joining component 22, the nut 238 is screwed tightly as mentioned above, and the joining component 22 is linked with the linking plate 23.

The linking plate 23 is linked with the foot plate 21 and the joining component 22, forming the practical and new-type auxiliary carrying device 2.

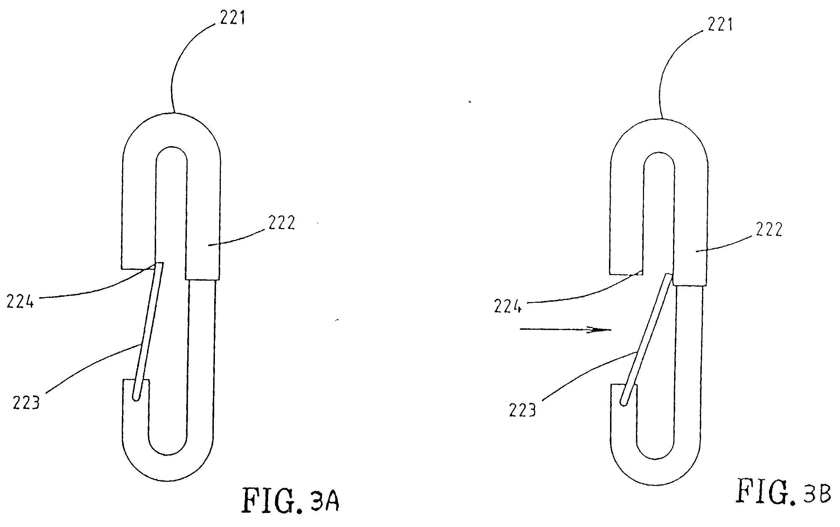

Fig 3a shows that the connector 221 of the joining component 22 is in the condition of contact. Under the condition, the elastic parts 223 which contact the hook-like parts 222 through the coiled spring not shown in the diagram contact the end 224 of the hook-like parts 222. When the user wants to link the practical and new-type auxiliary carrying device 2 with the rear lateral axis 11 of the baby carriage 1, he or she only presses the elastic parts 223 of the connectors 221 by the hands, the elastic parts 223 will be pressed to an angel (as shown in Fig 3b, the sign of arrow represents external force), and the connectors 221 can be hooked with the rear lateral axis 11 of the baby carriage 1 through the hook-like parts 222. Then, when the user lets go (external force disappears), the elastic parts 223 will rebound through the elastic force of the coiled spring and tightly contact the end 224 of the hook-like parts 222. So the joining component 22 of the auxiliary carrying device 2 will be steadily linked with the rear lateral axis 11 of the baby carriage 1. This is shown in Fig 4. When the user wants to separate the auxiliary carrying device 2 from the baby carriage 1, he or she presses the elastic parts 223 of the connectors 221, the elastic parts 223 will be pressed to an angel, the joining component 22 will be separated and the auxiliary carrying device 2 can be easily separated.

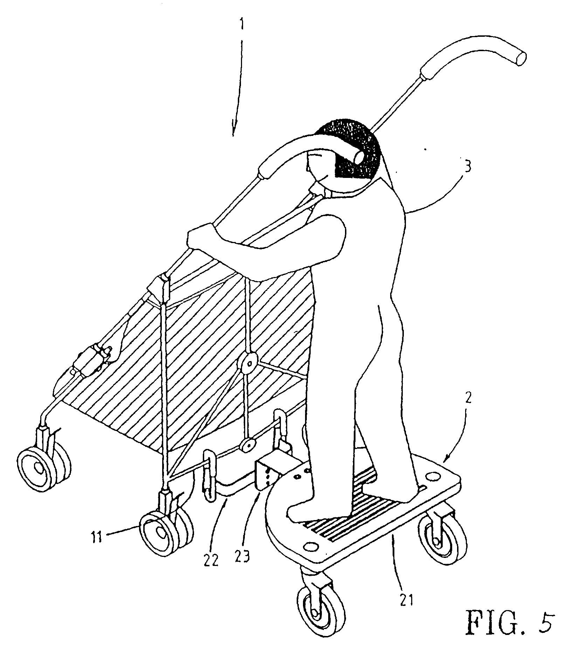

Fig 5 shows that the child 3 stands on the auxiliary carrying device 2 which is linked with the rear lateral axis 11 of the baby carriage 1. As shown in the diagram, when the adult pushes the baby carriage 1 to walk, the child 3 only needs to stand on the auxiliary carrying device 2, holds the baby carriage 1 and moves with the baby carriage 1 without making efforts to walk.

It is better to install the non-slipping part 216 on the surface of the foot plate 2 where the child 3 stand so that the child 3 will not slip and can stand on the auxiliary carrying device 2 steadily.

The practical and new-type auxiliary carrying device 2 can adapt to various baby carriages by readjusting the height of the foot plate 21 in light of the heights and sizes of the rear lateral axes of diverse baby carriages, that is, the linking plate 23 can be linked with the joining component 22 through the readjustment of the rear lateral axis of different types of baby carriages. For example, as shown in Figs 1, 2, 4 and 5, the connectors 22 are linked with the linking plate 23 at the fixing hole 235 on the uppermost part of the vertical plate 23A of the linking plate 23. When the rear lateral axis 11 of the baby carriage 1 which the auxiliary carrying device 2 is linked with differs in height and size, the linking position of the linking plate 23 and the joining component 22 can be readjusted to adapt to this, that is, in light of the actual height and size of the rear lateral axis 11 of the baby carriage 1, the most appropriate fixing hole 235 is chosen from the fixing holes on the vertical plate 23A of the linking plate 23, the screw 237 passes through the hole 225 of the joining component 22 and the chosen fixing hole 235 according to the above method, the nut 238 is screwed tightly, and the joining component 22 is linked with the linking plate 23.

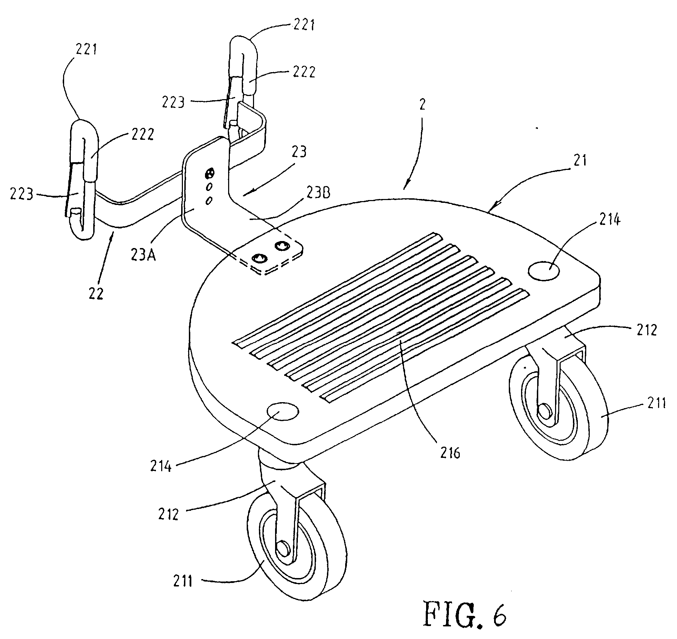

Or the linking plate 23 is reversed by 180 degrees, the vertical plate 23A of the linking plate 23 turns upwards, a most appropriate fixing hole 235 is chosen from the fixing holes 235 on the vertical plate 23A of the linking plate 23 in light of the actual height and size of the rear lateral axis 11 of the baby carriage 1, and the joining component 22 is linked with the linking plate 23 at the position of the chosen fixing hole 235 according to the above method. This is shown in fig 6.

Or there are several holes (the vertical plate is installed at the centre of the joining component) at the centre of the joining component 22, to readjust the connection of the linking plate 23 and the joining component 22.

Or the two rotating wheels 211 on the outer lower side of the foot plate 21 can be set to the readjustable height, the height of the rear lateral axis 11 of the baby carriage 1 is readjusted through the readjustment of the connection of the linking plate 23 and the joining component 22, the height of the rotating wheels 211 below the foot plate 21 can be readjusted, and the auxiliary carrying device 2 can be readjusted to the most appropriate height.

It is clear that other parts such as fastening parts, meshing parts and hook-like parts can replace the connectors 221 of the joining component 22. For example, the hook-like parts 221a in Fig 7 replace the connectors 221. Fig 7a is the sectional figure for the hook-like parts 221a under normal conditions (without the force), and Fig 7b is the sectional figure for the hook-like parts 221a under the force. At the end 223a of the hooks 222a of the hook-like parts 221a there is a sliding part 224a. Inside the sliding part 224a there is a spring 225a. The first part 226a1 and the second part 226a2 of the pulling bolt 226a are linked by the connecting rod 227a. The first part 226a1 of the pulling bolt 226a is the slot 227a for the projecting hooks 222a which makes it possible for the user to pull by hand, and the second part 226a2 of the pulling bolt 226a is the spring 225a inside the sliding parts 224a which is propped by the sliding parts.

When the hook-like parts 221a are under normal conditions (without the force), the outer part of the second part 226a2 of the pulling bolt 226a comes out of the sliding parts 224a and sets a very small space, to prevent the rear lateral axis 11 of the baby carriage 1 from coming off, as shown in Fig 7a. When the hook-like parts 221a are hooked with the rear lateral axis 11 of the baby carriage 1, the first part of 226a1 of the pulling bolt 226a is pulled outward, the second part 226a of the pulling bolt 226a moves and presses the spring 225a, the outer part of the second part 226a2 will completely withdraw to the inside of the sliding parts 224a and sets a big space, as shown in Fig 7b. The hooks 221a are hooked with the rear lateral axis 11 of the baby carriage 1 through the hook-like parts 222a.

Then, when the user lets go (external force disappears), the pulling bolt 226a will rebound and return to the normal state through the elastic force of the spring 225a and is steadily hooked with the rear lateral axis of the baby carriage 1.

It is clear that the method of fixing between the above-mentioned linking plate 23, the foot plate 21 and the joining component 22, between the foot plate 21 and the rotating wheels 221 and the screw and the nut can be replaced by the combination of the screw and back-up ring or by other fixing and linking methods.

With regard to the rear lateral axis 11 of the baby carriage 1, the flat or round steel bar is applied to the practical and new-type auxiliary carrying device 2.

It is clear that the child can stand on the practical and new-type auxiliary carrying device 2 of the baby carriage and the cat, dog or other pets can stand or sit on it.

## Claims

1. An auxiliary carrying (2) device for a baby carriage (1) and which can be linked to the rear lateral axis or any other horizontal bar on the baby carriage through assembling and disassembling where the auxiliary carrying device includes a foot plate (21) of proper size for a child (3) to stand on and with two pivoting rotating wheels (211) installed beneath the outer lower side of the foot plate (21), **characterized in that** on two sides of a joining component (22) are connectors (221, 222), which can help to link the auxiliary carrying device (2) to the rear lateral axis (11) or bar of the baby carriage (1), that a linking plate (23) is arranged to link the foot plate (21) to the joining component (22) the linking plate (23) consists of a vertical plate (23A) for connecting the joining component (22) and a lateral plate (23B) for connecting the foot plate (21), that on one side of the vertical linking plate (23A) and the joining component (22) is a fixing part (237) and on the other side of said linking plate (23A) are several fixing holes (235) which are arranged vertically, that said linking plate (23) can be affixed to the joining component (22) by means of a bolt- and nut method (237, 238) through the hole (225) in the frame of said joining component (22) and one of the plurality of holes (235) so selected in the vertical portion of said linking plate (23) the height of the front of the foot plate (21) can be readjusted to the rear lateral axis (11) or bar of the baby carriage (1).

2. An auxiliary carrying device (2) for a baby carriage (1) as mentioned in the claim 1, **characterized in that** the connectors (221) on the two sides of the joining component (22) consist of hook-like parts (222) and elastic parts (223), the elastic parts (223), which contact the hook-like parts (222) by a coiled spring and which can be pressed by hand of the user.

3. An auxiliary carrying device (2) for a baby carriage (1) as mentioned in any of the previous claims, **characterized in that** a fixing part (237) is on the side of the joining component (22) and the fixing holes (235) are on the side of the linking plate (23).

4. An auxiliary carrying device (2) for a baby carriage (1) as mentioned in the claim 1, **characterized in that** the fixing part is on the side of the linking plate (23) and the fixing hole (225) is on the side of the joining component (22).

5. An auxiliary carrying device (2) for a baby carriage (1) as mentioned in the claim 1, **characterized in that** the fixing part consists of the screw (237) and the fixing hole (225, 235).

6. An auxiliary carrying device (2) for a baby carriage (1) as mentioned in the claim 1, **characterized in that** the said linking plate (23) is substantially L-shaped.

7. An auxiliary carrying device (2) for a baby carriage (1) as mentioned in the claim 1, **characterized in that** the said linking plate (23) is linked to the foot plate (21) through assembling and disassembling.

8. An auxiliary carrying device (2) for a baby carriage (1) as mentioned in the claim 7, **characterized in that** said linking plate (23) is linked to the foot plate (21) by screws (233).

9. An auxiliary carrying device (2) for a baby carriage (1) as mentioned in the claim 1, **characterized in that** on the surface of the foot plate (21) is a non-slipping part (216).

10. An auxiliary carrying device (2) for a baby carriage (1) as mentioned in the claim 1, **characterized in that** the connectors on the two sides of the joining component consist of hook-like parts, the sliding parts on the end of the hook-like parts having a spring, the pulling bolt whose first and second parts are linked by the connecting rod, the first part of the pulling bolt is the slot for the projecting hook-like parts which makes it possible for the user to pull by hand, and the second part of the pulling bolt is the spring inside the sliding parts and which is propped by the sliding parts.
